# EUROPÄISCHE PATENTSCHRIFT

(11) **EP 3 589 470 B1**
(45) Veröffentlichungstag und Bekanntmachung des Hinweises auf die Patenterteilung: **02.07.2025**
(21) Anmeldenummer: 18704203.1
(22) Anmeldetag: 06.02.2018
(51) Int. Cl.: B29C 33/52, B29C 70/20, B29C 70/86, B33Y 80/00

(54) **FASERBAUTEIL MIT ZU EINEM FACHWERK VERBUNDENEN FASERSTÄBEN**
FIBRE COMPONENT HAVING FIBRE RODS CONNECTED TO FORM A FRAMEWORK
COMPOSANT À BASE DE FIBRES COMPORTANT DES TIGES DE FIBRES RELIÉES SOUS FORME DE TREILLIS

(30) Priorität: 02.03.2017 DE 102017203404
(43) Veröffentlichungstag der Anmeldung: 08.01.2020
(73) Patentinhaber: Bayerische Motoren Werke Aktiengesellschaft, 80809 München (DE)
(72) Erfinder: HOGGER, Thomas, 83624 Otterfing (DE)
(86) Internationale Anmeldenummer: PCT/EP2018/052845
(87) Internationale Veröffentlichungsnummer: WO 2018/158048

(56) Entgegenhaltungen:
- EP-A1- 0 009 403
- GB-A- 1 305 198
- US-B1- 6 299 246

## Beschreibung

Die Erfindung betrifft ein Faserbauteil, das aus zu einem Fachwerk verbundenen Faserstäben besteht.

Faserstäbe werden in der Technik in Faserverbundbauteilen eingesetzt und unterscheiden sich von Faserlagen dadurch, dass sie durch eine Vielzahl von durchgehenden Fasern geformt sind, d. h. durch die Fasern in eine vorbestimmte Stabform gebracht sind. Als Stabquerschnittsform werden hierbei zumeist runde, viereckige oder sechseckige Stäbe mit einem Höhen-Breitenverhältnis von größer oder gleich 1/10 verwendet. Bei geringeren Höhen-Breitenverhältnissen handelt es sich nicht um einen geformten Faserstab.

Faserverstärkte Kunststoffe besitzen ein hohes Leichtbaupotenzial und können im Vergleich zu anderen Werkstoffen, wie beispielsweise Metallen oder unverstärkten Kunststoffen, durch die eingearbeiteten Fasern hohe Zugkräfte aufnehmen. Dabei sind die gewichtsspezifischen Vorteile von faserverstärkten Kunststoffen am besten nutzbar, wenn die Fasern im Matrixmaterial lastpfadgerecht ausgelegt sind, was eine belastungsgerechte Konstruktion des Werkstoffs voraussetzt. Deshalb ist es wünschenswert Faserstäbe nicht nur in einer Lastrichtung einsetzen zu können, sondern innerhalb einer Gitterstruktur auch Richtungswechsel von Faserstäben realisieren zu können, um ein multiaxial belastetes Bauteil zu gewährleisten.

Aus den Dokumenten EP 0 009 403 A1, GB 1 305 198 A und US 6 299 246 B1 sind bereits verschiedene Faserbauteile bekannt, welche jeweils eine aus Faserstäben gebildete fachwerkartige Struktur aufweisen.

Der Erfindung liegt deshalb die Aufgabe zugrunde, ein Faserbauteil bereitzustellen, das günstig und energieeffizient herzustellen ist, sehr leicht ist sowie Lastpfade in unterschiedliche Richtungen aufnehmen kann. Zudem ist es Aufgabe der Erfindung, ein Verfahren zur günstigen und energieeffizienten Herstellung eines solchen Faserbauteils bereit zu stellen.

Diese Aufgabe wird durch die Merkmalskombination gemäß des Patentanspruchs 1 gelöst.

Erfindungsgemäß wird ein Faserbauteil umfassend mindestens drei Faserstäbe vorgeschlagen. Die zumindest drei Faserstäbe umfassen jeweils sich in Axialrichtung der Faserstäbe durchgängig erstreckenden Fasern. Zumindest zwei der drei Faserstäbe bilden jeweils einen Trägerstab und zumindest einer der drei Faserstäbe bildet jeweils einen Verbindungsstab. Die Trägerstäbe sind in ihrer Axialrichtung im Wesentlichen parallel und zueinander beabstandet angeordnet. Der Verbindungsstab verbindet die Trägerstäbe miteinander und bildet an den jeweiligen Verbindungspunkten zwischen dem Verbindungsstab und den Trägerstäben jeweils einen Knotenpunkt mit dem jeweiligen Trägerstab aus. Als Faserbauteil ist hierbei auch ein Faserverbundbauteil zu verstehen, wobei die Fasern bzw. die Faserstäbe mit einer Matrix getränkt sind, sodass die Matrix in und an den Faserstäben ausgebildet ist. Die Matrix ist auch so ausbildbar, dass sie sich zwischen den Faserstäben erstreckt, sodass die Matrix das Volumen zwischen den Faserstäben füllt. Ein Verbindungspunkt bzw. Verbindungsabschnitt liegt zwischen einem Verbindungsstab und einem Trägerstab an der Stelle, an der der Verbindungsstab an dem Trägerstab zur Verbindung des Verbindungsstabs mit dem Trägerstab anliegt.

Von Vorteil ist eine Ausbildungsvariante, bei der mindestens drei der die mindestens drei Faserstäbe durch ihre Anordnung zueinander eine Fachwerkstruktur bilden.

Erfindungsgemäß bilden mindestens drei Faserstäbe jeweils einen Trägerstab bilden. Die Trägerstäbe sind in ihrer Axialrichtung X zueinander im Wesentlichen parallel angeordnet und liegen auf mindestens zwei voneinander beanstandeten Ebenen, sodass sie ein gedachtes Volumen zwischen sich bilden. Zumindest ein Verbindungsstab ist um die das gedachte Volumen bildenden Trägerstäbe gewickelt und verbindet die Trägerstäbe miteinander. Der zumindest eine Verbindungsstab bildet an seinen Verbindungspunkten mit den das gedachte Volumen bildenden Trägerstäben die Knotenpunkte mit den das Volumen bildenden Trägerstäben aus.

Der zumindest eine Verbindungstab bzw. die Verbindungsstäbe bildet bzw. bilden bei einer vorteilhaften Weiterbildung mit den das gedachte Volumen bildenden Trägerstäben durch ihre Anordnung zueinander ein Raumfachwerk.

Die Faserstäbe werden in einer Gitterstruktur angeordnet, wobei die Gitterstruktur in Form eines Fachwerks oder Raumfachwerks ausgebildet ist, wodurch die Faserstäbe, die das Fachwerk bilden, ausschließlich mit Normalkräften beansprucht werden, also mit Kräften entlang der Längsachse der Faserstäbe.

Von Vorteil ist weiter eine Ausbildungsform, bei der das Faserbauteil ein Träger ist, dessen Seitenflächen zumindest zum Teil aus den mindestens drei Faserstäben bestehen, die in der Fachwerkstruktur oder in der Vielzahl von Fachwerkstrukturen angeordnet sind.

Ferner ist bei einer Ausbildungsvariante von Vorteil, dass der Träger von den das Volumen bildenden Faserstäben bzw. Trägerstäben bestimmt ist und die Seitenflächen jeweils zwischen zwei der parallelen, das Volumen bildenden Faserstäben bzw. Trägerstäben liegt.

Vorteilhaft ist ferner eine Weiterbildungsform, bei der ein Trägerstab mit dem Verbindungsstab an ihrem gemeinsamen Knotenpunkt durch Verpressen des Trägerstabs mit dem Verbindungsstab verbunden ist. Durch das Verpressen der Faserstäbe verbinden sich die imprägnierten Faserstäbe zum Teil über ihre außenliegende Matrix und werden so miteinander verklebt. Der Trägerstab und der Verbindungsstab sind stoffschlüssig verbunden.

Vorteilhaft ist eine Weiterbildungsform, bei der die Faserstäbe zumindest an den Knotenpunkten eine Matrix aus einem thermoplastischen oder einem duroplastischen Kunststoff aufweisen.

Des Weiteren ist eine Ausführungsvariante von Vorteil, bei der ein Faserstab mit dem weiteren Faserstab bzw. ein Trägerstab mit dem Verbindungsstab an ihrem gemeinsamen Knotenpunkt durch die Matrix verbunden ist. Die Faserstäbe werden dabei erst in ihrer bestimmungsmäßigen, fachwerkartigen Anordnung imprägniert oder kurz nach der Imprägnierung zu dem Fachwerk angeordnet. Die Matrix der Faserstäbe vermischt sich und bildet bei dem Aushärten der Matrix eine untrennbare, stoffschlüssige Verbindung zwischen den Faserstäben. Die Matrix kann dabei auch die gesamte Fachwerkstruktur umschließen und Hohlräume in der Fachwerkstruktur füllen.

Bei einer vorteilhaften Ausführungsvariante ist ein Faserstab mit dem weiteren Faserstab bzw. ein Trägerstab mit dem Verbindungsstab an ihrem gemeinsamen Knotenpunkt durch einen Kunststoff verbunden, der den Faserstab und den weiteren Faserstab bzw. den Trägerstab und den Verbindungsstab zumindest teilweise umgibt. Der Kunststoff bildet dabei zumindest den Knotenpunkt aus und verbindet so die Faserstäbe miteinander. Alternativ kann der Kunststoff zusätzlich die gesamte Fachwerkstruktur, die von den Faserstäben gebildet ist, umschließen und Hohlräume in der Fachwerkstruktur füllen. Der Kunststoff umhüllt die von der Matrix imprägnierten Faserstäbe.

Zur Herstellung eines hier beschriebenen Faserbauteils können z.B. die mindestens drei Faserstäbe in einem Werkzeug so eingelegt werden, dass zumindest zwei Faserstäbe der mindestens drei Faserstäbe parallel und zueinander beabstandet angeordnet sind und zumindest ein Faserstab um die zumindest zwei Faserstäbe gewickelt ist und mit diesen zumindest einen Knotenpunkt an ihren Verbindungspunkten ausbildet. Die Faserstäbe werden mit der Matrix imprägniert und anschließend wird das Faserbauteil nach einer Aushärtezeit von dem Werkzeug getrennt. Das Imprägnieren der Faserstäbe ist vor oder nach dem Einlegen der Faserstäbe in das Werkzeug durchführbar. Es sind auch Prepregs (vorimprägnierte Faserstäbe) in das Werkzeug einleg- bzw. verwendbar. Nach dem Einlegen der Faserstäbe in das Werkzeug wird das Faserbauteil, das aus den mindestens drei Faserstäben gebildet ist, nach einer Aushärtezeit von dem Werkzeug getrennt.

Vorteilhaft ist, dass das Werkzeug eine verlorene Form aufweist oder eine verlorene Form ist, in die die mindestens drei Faserstäbe bei dem Einlegen in das Werkzeug angeordnet werden. Die verlorene Form besteht vorzugsweise aus Wachs und ist durch ein 3D-Druckverfahren herstellbar.

Durch eine Kombination des Schrittes des Anordnens der Faserstäbe in der verlorenen Form und des Schrittes der Herstellung der verlorenen Form sind komplexe Strukturen realisierbar. Beispielsweise kann ein 3D-Drucker einen Teil der verlorenen Form fertigen, in den ein Roboter einen Faserstab oder mehrere Faserstäbe einlegt. Nach dem Einlegen der Faserstäbe ist ein weiterer Teil der verlorenen Form durch den 3D-Drucker herstellbar, wobei wieder ein Einlegen von Faserstäben folgt.

Weiter ist von Vorteil, dass die verlorene Form schmelzbar ist und bei dem Trennen der Faserstäbe von dem Werkzeug geschmolzen wird. Durch das Schmelzen der verlorenen Form fließt die geschmolzene verlorene Form aus dem aus den mindestens drei Faserstäben gebildeten Fachwerk aus.

Vorteilhaft ist, dass die mindestens drei Faserstäbe von einem Roboter in die verlorene Form eingelegt und zueinander angeordnet werden, sodass die mindestens drei Faserstäbe die Fachwerkstruktur bilden.

Von Vorteil ist ferner, dass das Werkzeug alternativ einen Blasformkern, einen Silikonkern oder einen gummielastischen Kern aufweist. Der Blasformkern, der Silikonkern oder der gummielastische Kern kann aus dem Faserbauteil entformt und dadurch wiederverwendet werden. Es handelt sich bei dem Blasformkern, dem Silikonkern oder dem gummielastischen Kern um Dauerformen.

Alternativ ist Vorteilhaft, dass das Werkzeug einen Kern aufweist, der in dem Faserbauteil verbleibt oder aus dem Faserbauteil entformbar ist.

Bei einem Bauteil umfassend einer Vielzahl von Faserbauteilen ist vorteilhaft, dass die Faserbauteile der Vielzahl von Faserbauteilen jeweils gerade sind, ein Faserbauteil der Vielzahl von Faserbauteilen jeweils auf einer Seite in Längsrichtung mit einer Seite in Längsrichtung eines anderen Faserbauteils der Vielzahl von Faserbauteilen an einem Verbindungspunkt verbunden ist, das Faserbauteil gegenüber dem anderen Faserbauteil unter einem Winkel angeordnet ist und ein biegsames Element an einer Vielzahl von Verbindungspunkten fixiert ist, sodass das biegsame Element den Verbindungspunkten folgend einen Radius ausbildet. Das biegsame Element ist beispielsweise ein Blech und bildet die Außenfläche bzw. Sichtfläche einer Konstruktion.

Die vorstehend offenbarten Merkmale sind beliebig kombinierbar soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: ein nicht erfindungsgemäßes flaches Faserbauteil in einer isometrischen Darstellung;
- Fig. 2: das flache Faserbauteil aus Figur 1 in einer Seitenansicht;
- Fig. 3: ein raumfachwerkausbildendes Faserbauteil in einer isometrischen Darstellung;
- Fig. 4: ein raumfachwerkausbildendes Faserbauteil in einer Seitenansicht;
- Fig. 5: ein raumfachwerkausbildendes Faserbauteil in einer Vorderansicht.

Die Figuren sind beispielhaft schematisch. Gleiche Bezugszeichen in den Figuren weisen auf gleiche funktionale und/oder strukturelle Merkmale hin.

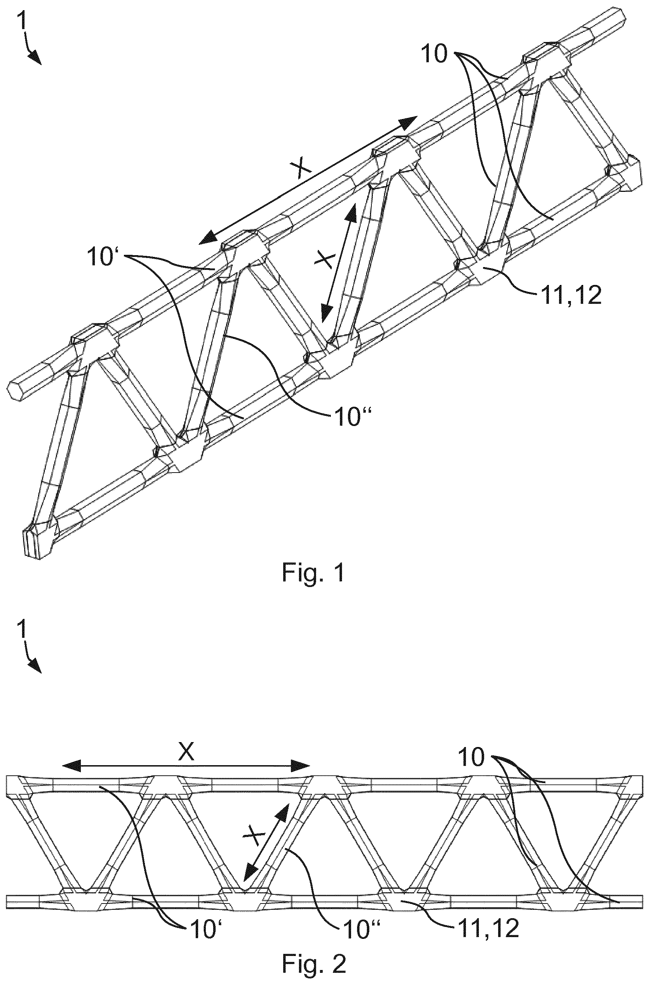

Figur 1 zeigt zur Veranschaulichung ein nicht erfindungsgemäßes flaches Faserbauteil 1, das aus drei Faserstäben 10 gebildet ist. Zwei der drei Faserstäbe 10 sind als Trägerstäbe 10' parallel zueinander angeordnet und weisen einen Abstand zwischen sich auf. Die Axialrichtung X der beiden parallelen Trägerstäbe 10' ändert sich nicht. Der dritte Faserstab 10 wird in einem Zick-Zack förmigen Verlauf als Verbindungsstab 10" um die beiden parallelen Trägerstäbe 10' gewickelt. An den Verbindungspunkten 12 des Verbindungsstabs 10" mit den beiden parallelen Trägerstäben 10' bilden die jeweiligen Faserstäbe 10 Knotenpunkte 11 aus. Der Verbindungsstab 10" ändert nur an den Knotenpunkten 11 die Orientierung seiner Axialrichtung X und verläuft zwischen den Knotenpunkten 11 ohne die Orientierung seiner Axialrichtung X zu ändern. Das Faserbauteil der Figur 1 erstreckt sich im Wesentlichen in der Ebene wodurch es näherungsweise zwei-dimensional ist.

Figur 2 zeigt das Faserbauteil aus Figur 1 in einer Seitenansicht.

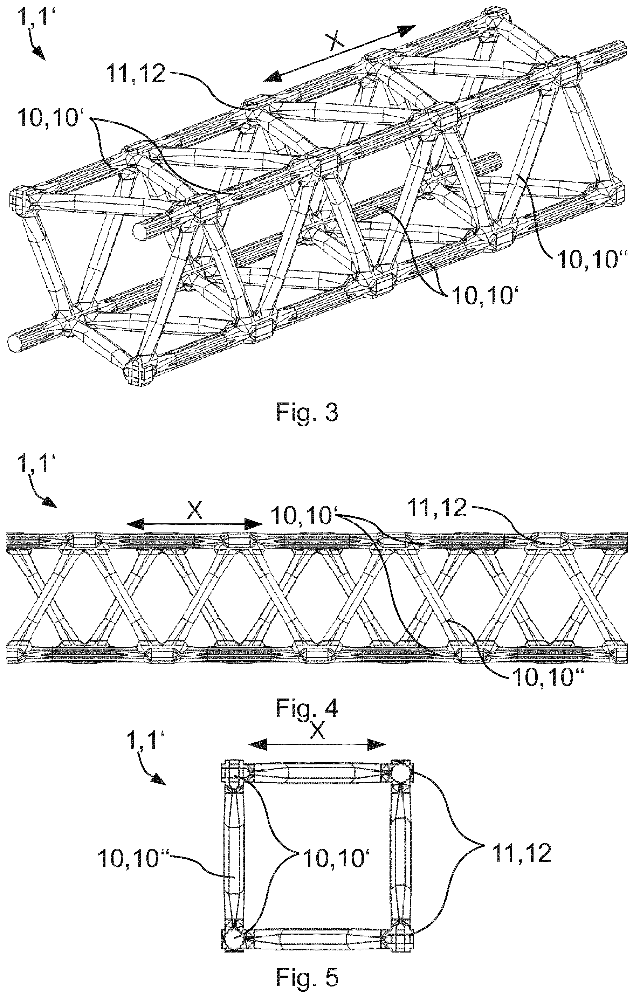

Figur 3 zeigt ein weiteres Faserbauteil 1, das jedoch von vier parallelen Trägerstäben 10' und zwei Verbindungsstäben 10" gebildet ist. Jeweils zwei der parallelen Trägerstäbe 10' liegen in zwei von einander beabstandeten Ebenen, wodurch ein quaderförmiges Volumen zwischen den vier Trägerstäben 10' aufgespannt wird. Ein Verbindungsstab 10" ist um die vier Trägerstäbe 10' gewickelt, sodass das Faserbauteil 1 ein Träger 1' ist. An den Verbindungspunkten 12 des Verbindungsstabs 10" mit den Trägerstäben 10' bilden die Faserstäbe 10 Knotenpunkte 11 aus, wobei der Verbindungsstab 10" an den Knotenpunkten 11 die Orientierung seiner Axialrichtung X ändert. Die Faserstäbe 10 und die Knotenpunkte 11 sind in eine Matrix eingebettet, die nachdem Aushärten die Faserstäbe 10 und die Knotenpunkte 11 versteift.

Figur 4 zeigt eine Seitenansicht des Faserbauteils aus Figur 3.

Figur 5 zeigt eine Vorderansicht des Faserbauteils aus Figur 3.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Beispielsweise sind mit der Fachwerkstruktur Faserbauteile in anderen Geometrien als einem Träger oder ein Stab, beispielsweise Quader, Sphären oder komplexe unregelmäßige Geometrien, bildbar. Derart hergestellte Faserverbundbauteile können beispielsweise als Fahrradrahmen oder für andere Sportgeräte eingesetzt werden.

## Patentansprüche

1. Faserbauteil (1) umfassend mindestens drei Faserstäbe (10) mit jeweils sich in Axialrichtung (X) der Faserstäbe (10) durchgängig erstreckenden Fasern,
wobei zumindest zwei der drei Faserstäbe (10) jeweils einen Trägerstab (10') bilden und zumindest einer der drei Faserstäbe (10) jeweils einen Verbindungsstab (10") bildet,
die Trägerstäbe (10') in ihrer Axialrichtung (X) im Wesentlichen parallel und zueinander beabstandet angeordnet sind,
der Verbindungsstab (10") die Trägerstäbe (10') miteinander verbindet und
der Verbindungsstab (10") an den jeweiligen Verbindungspunkten (12) zwischen dem Verbindungsstab (10") und den Trägerstäben (10') jeweils einen Knotenpunkt (11) mit dem jeweiligen Trägerstab (10') ausbildet,
wobei mindestens drei Faserstäbe (10) jeweils einen Trägerstab (10') bilden, die Trägerstäbe (10') in ihrer Axialrichtung X zueinander parallel und auf mindestens zwei voneinander beanstandeten Ebenen angeordnet sind, sodass sie ein gedachtes Volumen zwischen sich bilden,
**dadurch gekennzeichnet, dass** zumindest ein Verbindungsstab (10") um die das gedachte Volumen bildenden Trägerstäbe (10') gewickelt ist und der zumindest eine Verbindungsstab (10") an seinen Verbindungspunkten (12) mit den das gedachte Volumen bildenden Trägerstäben (10') die Knotenpunkte (11) mit den das Volumen bildenden Trägerstäben (10') ausbildet.

2. Faserbauteil (1) nach dem vorhergehenden Anspruch, wobei die mindestens drei Faserstäbe (10) durch ihre Anordnung zueinander eine Fachwerkstruktur bilden.

3. Faserbauteil (1) nach einem der vorhergehenden Ansprüche,
wobei der zumindest eine Verbindungsstab (10") mit den das gedachte Volumen bildenden Trägerstäben (10') durch ihre Anordnung zueinander ein Raumfachwerk bilden.

4. Faserbauteil (1) nach einem der vorhergehenden Ansprüche, **dadurch gekennzeichnet, dass** das Faserbauteil (1) ein Träger (1') ist, dessen Seitenflächen zumindest zum Teil aus den mindestens drei Faserstäben (10) bestehen, die in der Fachwerkstruktur oder in der Vielzahl von Fachwerkstrukturen angeordnet sind.

5. Faserbauteil (1) nach dem vorhergehenden Anspruch, **dadurch gekennzeichnet, dass** der Träger (1') von den Trägerstäben (10') bestimmt ist und die Seitenflächen jeweils zwischen zwei der parallelen Trägerstäben (10') liegt.

6. Faserbauteil (1) nach einem der vorhergehenden Ansprüche, **dadurch gekennzeichnet, dass** ein Trägerstab (10') mit dem Verbindungsstab (10") an ihrem gemeinsamen Knotenpunkt (11) durch Verpressen des Trägerstabs (10') mit dem Verbindungsstab (10") verbunden ist.

7. Faserbauteil (1) nach einem der vorhergehenden Ansprüche, wobei die Faserstäbe (10) zumindest an den Knotenpunkten (11) eine Matrix aus einem thermoplastischen oder einem duroplastischen Kunststoff aufweisen.

8. Faserbauteil (1) nach dem vorhergehenden Anspruch, **dadurch gekennzeichnet, dass** ein Trägerstab (10') mit dem Verbindungsstab (10") zusammen an ihrem gemeinsamen Knotenpunkt (11) durch die Matrix verbunden ist.

9. Faserbauteil (1) nach einem der vorhergehenden Ansprüche, **dadurch gekennzeichnet, dass** ein Trägerstab (10') mit dem Verbindungsstab (10") zusammen an ihrem gemeinsamen Knotenpunkt (11) durch einen Kunststoff verbunden ist, der den Trägerstab (10') und den Verbindungsstab (10") zumindest teilweise umgibt.

## Claims

1. Fibre component (1) comprising at least three fibre rods (10) each having fibres extending continuously in the axial direction (X) of the fibre rods (10),
wherein at least two of the three fibre rods (10) each form a support rod (10'), and at least one of the three fibre rods (10) each forms a connecting rod (10"),
the support rods (10') are arranged substantially parallel to and spaced apart from one another in their axial direction (X),
the connecting rod (10") connects the support rods (10') to one another, and
the connecting rod (10") respectively forms a node point (11) with the respective support rod (10') at the respective connecting points (12) between the connecting rod (10") and the support rods (10'),
wherein at least three fibre rods (10) each form a support rod (10'), the support rods (10') are arranged parallel to one another in their axial direction X and on at least two spaced-apart planes, with the result that they form an imaginary volume between them,
**characterized in that** at least one connecting rod (10") is wound around the support rods (10') forming the imaginary volume, and the at least one connecting rod (10") forms the node points (11) with the support rods (10') forming the volume at its connecting points (12) with the support rods (10') forming the imaginary volume.

2. Fibre component (1) according to the preceding claim, wherein the at least three fibre rods (10) form a framework structure through their arrangement with respect to one another.

3. Fibre component (1) according to one of the preceding claims,
wherein the at least one connecting rod (10"), together with the support rods (10') forming the imaginary volume, form a three-dimensional framework through their arrangement with respect to one another.

4. Fibre component (1) according to one of the preceding claims, **characterized in that** the fibre component (1) is a support (1') whose lateral surfaces consist at least in part of the at least three fibre rods (10) which are arranged in the framework structure or in the plurality of framework structures.

5. Fibre component (1) according to the preceding claim, **characterized in that** the support (1') is determined by the support rods (10'), and the lateral surfaces are each situated between two of the parallel support rods (10').

6. Fibre component (1) according to one of the preceding claims, **characterized in that** a support rod (10') is connected to the connecting rod (10") at their common node point (11) by press-moulding the support rod (10') with the connecting rod (10").

7. Fibre component (1) according to one of the preceding claims, wherein the fibre rods (10) have, at least at the node points (11), a matrix consisting of a thermoplastic or a thermoset.

8. Fibre component (1) according to the preceding claim, **characterized in that** a support rod (10') is connected together with the connecting rod (10") at their common node point (11) by the matrix.

9. Fibre component (1) according to one of the preceding claims, **characterized in that** a support rod (10') is connected together with the connecting rod (10") at their common node point (11) by a plastic which at least partially surrounds the support rod (10') and the connecting rod (10").

## Revendications

1. Composant à base de fibres (1) comprenant au moins trois tiges de fibres (10) avec des fibres s'étendant respectivement en continu dans la direction axiale (X) des tiges de fibres (10),
au moins deux des trois tiges de fibres (10) formant chacune une tige de support (10') et au moins une des trois tiges de fibres (10) formant respectivement une tige de liaison (10"),
les tiges de support (10') étant disposées sensiblement parallèlement et à distance les unes par rapport aux autres dans leur direction axiale (X),
la tige de liaison (10") reliant entre elles les tiges de support (10') et
la tige de liaison (10") réalisant, sur les points de liaison (12) respectifs, entre la tige de liaison (10") et les tiges de support (10') respectivement un nœud (11) avec la tige de support (10') respective,
au moins trois tiges de fibres (10) formant chacune une tige de support (10'), les tiges de support (10') étant disposées, dans leur direction axiale X, parallèlement les unes par rapport aux autres et sur au moins deux plans tenus à distance l'un de l'autre si bien qu'elles forment entre elles un volume imaginaire,
**caractérisé en ce qu'**au moins une tige de liaison (10") est enroulée autour des tiges de support (10') formant le volume imaginaire et l'au moins une tige de liaison (10") réalise, sur ses points de liaison (12) avec les tiges de support (10') formant le volume imaginaire, les nœuds (11) avec les tiges de support (10') formant le volume.

2. Composant à base de fibres (1) selon la revendication précédente, les au moins trois tiges de fibres (10) formant, par leur disposition les unes par rapport aux autres, une structure en treillis.

3. Composant à base de fibres (1) selon l'une des revendications précédentes,
l'au moins une tige de liaison (10") formant un treillis en trois dimensions avec les tiges de support (10') formant le volume imaginaire par leur disposition les unes par rapport aux autres.

4. Composant à base de fibres (1) selon l'une des revendications précédentes, **caractérisé en ce que** le composant à base de fibres (1) est un support (1'), dont les faces latérales sont constituées au moins en partie des au moins trois tiges de fibres (10), qui sont disposées dans la structure en treillis ou dans la pluralité de structures en treillis.

5. Composant à base de fibres (1) selon la revendication précédente, **caractérisé en ce que** le support (1') est défini par les tiges de support (10') et les faces latérales se situent respectivement entre deux des tiges de support (10') parallèles.

6. Composant à base de fibres (1) selon l'une des revendications précédentes, **caractérisé en ce qu'**une tige de support (10') est reliée à la tige de liaison (10") sur leur nœud commun (11) par compression de la tige de support (10') avec la tige de liaison (10").

7. Composant à base de fibres (1) selon l'une des revendications précédentes, les tiges de fibres (10) présentant, au moins sur les nœuds (11), une matrice en une matière thermoplastique ou en une matière plastique thermodurcissable.

8. Composant à base de fibres (1) selon la revendication précédente, **caractérisé en ce qu'**une tige de support (10') est reliée à la tige de liaison (10") conjointement sur leur nœud commun (11) par la matrice.

9. Composant à base de fibres (1) selon l'une des revendications précédentes, **caractérisé en ce qu'**une tige de support (10') est reliée à la tige de liaison (10") conjointement sur leur nœud (11) commun par une matière plastique, qui entoure au moins en partie la tige de support (10') et la tige de liaison (10").
